# EUROPÄISCHE PATENTANMELDUNG

(11) **EP 0 662 596 A2**
(43) Veröffentlichungstag der Anmeldung: **12.07.1995**
(21) Anmeldenummer: 94115957.6
(22) Anmeldetag: 10.10.1994
(51) Int. Cl.: F27B 9/30, F27D 17/00

(54) **Tunnelofen**

(30) Priorität: 23.12.1993 DE 4344214
(71) Anmelder: Innovatherm Prof. Dr. Leisenberg GmbH + Co. KG, D-35510 Butzbach (DE)
(72) Erfinder: Leisenberg, Dr.-Ing. Prof. Wolfgang, D-61231 Bad Nauheim (DE)
(74) Vertreter: Engelhardt, Guido, Dipl.-Ing.

(57) **Zusammenfassung**

Bei einem Tunnelofen (1) zum Brennen von brennstoffhaltigen keramischen Formlingen (2), der vor der Brennzone (B) eine Anwärmzone (A) aufweist und in dessen Rauchgasleitung (13) Wärmetauscher (15, 16) eingesetzt sind, ist die Rauchgasleitung (13) mit einer oder mehreren zwischen dem Tunnelofen (1) und den Wärmetauschern (15, 16) angeordneten Brennkammern (21) ausgestattet, in denen die der Anwärmzone (A) und/oder der Brennzone (B) entnommenen Rauchgase (11 bzw. 19) auf eine dem zulässigen Emissionsgrad angepaßte Temperatur erhitzbar sind.

Durch diese Ausgestaltung wird erreicht, daß eine sichere Funktion in bezug auf die Emnissionswerte gegeben ist und daß die Schwelgasoxydation vom Brennprozeß entkoppelt wird.

## Beschreibung

Die Erfindung bezieht sich auf einen Tunnelofen zum Brennen von brennstoffhaltigen keramischen Formlingen, der in Vorschubrichtung der Formlinge vor der Brennzone eine Anwärmzone aufweist und in dessen Rauchgasleitung mindestens ein Wärmetauscher eingesetzt ist, mittels dem die einer einen Teil der Anwärmzone bildenden Schwelgaszone entnommenen und in diese rückführbaren Schwelgase und/oder in einer mit einer gesonderten vorzugsweise durch steuerbare Hochgeschwindigkeitsbrenner versehenen Überhitzungszone aufheizbar sind.

Durch die DE-OS 39 23 887 ist ein Tunnelofen dieser Art bekannt. Es hat sich jedoch gezeigt, daß die internen Nachverbrennungssysteme empfindlich sind gegen Besatzwechsel und eine Abhängigkeit der Emissionswerte vom jeweiligen Betriebszustand besteht. Dies ist bei dem bekannten Tunnelofen nicht zu vermeiden, weil die Verbrennung der Schwelgase im Ofen geschieht und somit ein Kompromiß zwischen den Anforderungen an den Brennprozeß und Anforderungen an die Schwelgasoxidation gefunden werden muß. Derartige Tunnelöfen sind somit auf eine gewissenhafte Ofenführung angewiesen und erfordern entsprechenden Beobachtungsaufwand und auch die Kenntnis der inneren Zusammenhänge der Anlage.

Es ist daher Aufgabe der Erfindung, den Tunnelofen der vorgenannten Gattung in der Weise zu verbessern, daß eine sichere Funktion in bezug auf die Emissionswerte gegeben ist und daß die Schwelgasoxydation vom Brennprozeß entkoppelt wird.

Gemäß der Erfindung wird dies bei einem Tunnelofen der eingangs genannten Art dadurch erreicht, daß die Rauchgasleitung mit einer oder mehreren zwischen dem Tunnelofen und den Wärmetauschern angeordneten Brennkammern versehen ist, in denen die der Anwärmzone und/oder der Brennzone entnommenen Rauchgase auf eine dem zulässigen Emissionsgrad angepaßte Temperatur von etwa 600 - 850^{o} C erhitzbar sind.

Zweckmäßig ist es hierbei, die Brenner der vorzugsweise symmetrisch angeordneten Brennkammern in Abhängigkeit von der in dieser herrschenden Temperatur zu steuern und als Brennkammern die in die Wände des Tunnelofens integrierten Rauchgasabzüge vorzusehen.

Vorteilhaft ist es ferner, den Tunnelofen im Bereich der Schwelgaszone in Vorschubrichtung der Formlinge vor der Überhitzungszone mit einem oder mehreren Umwälzkreisen zu versehen, denen angewärmte Frischluft zuführbar ist, wobei die Umwälz- und Frischluft mittels der in der Rauchgasleitung angeordneten Wärmetauschern vorgewärmt werden kann, die Zufuhr der Frischluft zu den Umwälzkreisen in Abhängigkeit von dem in den Brennkammern herrschenden Sauerstoffgehalt gesteuert werden und die Umwälzkreise senkrecht zur Vorschubrichtung der Formlinge wirkend ausgebildet sein sollten.

Angebracht ist es auch, den Rauchgasabzug in Abhängigkeit von dem Sauerstoffgehalt in der Brennzone und/oder der Temperatur in der Anwärmzone einzustellen.

Die Rauchgase werden somit zwar weiterhin bei etwa 600^{o} C abgezogen, durchlaufen aber danach eine nachgeschaltete Brennkammer, in der sie auf die zur Erreichung der Emissionswerte erforderliche Oxidationstemperatur erhitzt werden.

Um zu verhindern, daß sich die Rauchgase der Aufwärmzone mit den Rauchgasen der Brennzone vermischen, ist es nach einer Weiterbildung angebracht, zwischen der Entnahmeöffnung für das aus der Anwärmzone in die Brennkammer abströmende Rauchgas und der Entnahmeöffnung für das aus der Brennzone in die Brennkammer abströmende Rauchgas eine Trannwand, vorzugsweise in Form eines Luftvorhanges, vorzusehen. Zur Bildung des Luftvorhanges können zwischen den beiden Entnahmeöffnungen in dem Tunnelofen angeordnete Hochgeschwindigkeitsbrenner dienen.

Im Gegensatz zum normalen Tunnelofenbetrieb werden jedoch diese Rauchgase nicht mehr im Gegenstrom durch die Anwärmzone geführt. Daher muß der Wärmeinhalt indirekt über die Wärmetauscher der Anwärmzone nutzbar gemacht werden, damit das thermodynamische Prinzip des Tunnelofens erhalten bleibt. Es hat sich weiter gezeigt, daß im Gegensatz zu dem bekannten Tunnelofen eine symmetrische Querumwälzung günstiger ist als der dort vorgesehene Gegenstrom. Der Grund liegt in den kürzeren Strömungswegen und dem damit erreichten geringeren Falschluftanteil, in der einfacheren konstruktiven Ausführung im Zuge der beidseits des Ofens geführten Rauchgasleitungen und im Vergleichmäßigungseffekt der Temperaturen durch die Querumwälzung.

Zweckmäßigerweise werden je zwei Wärmetauscher beidseits des Tunnelofens zu einem Umwälzkreis zusammengelegt und zwei solcher Umwälzkreise vorgesehen.

Da bereits in der Anwärmzone eine teilweise Oxidation der Schwelgase erfolgt, wird soviel Frischluft in diese Zone eingekoppelt, daß ein für die Oxidation optimaler Sauerstoffgehalt eingehalten wird. Der Querstrom wird also von einem kleinen Massenstrom in Schubrichtung überlagert, der vor dem eigentlichen Rauchgasabzug abgesaugt und in eine vorzugsweise in die Ofenwand integrierte Brennkammer geleitet wird. Hier wird dieser relativ geringe schadstoffbelastete Massenstrom auf eine Temperatur erhitzt, welche eine Aufoxidierung der Schadstoffe sicherstellt. Anschließend wird der nacherhitzte und schwelgasarme Strom zusammen mit den Rauchgasen aus der Feuerzone den Wärmetauscher zugeführt.

Die abgesaugte Rauchgasmenge richtet sich bei Beachtung eines minimalen Sauerstoffgehaltes in der Brennzone wie auch beim normalen Tunnelofenbetrieb nach dem Wärmebedarf der Aufwärmzone. Die Regelung der Rauchgasmenge erfolgt also in Abhängigkeit von der Temperatur der Anwärmzone unter Berücksichtigung eines gesicherten Sauerstoffangebotes in der Brenn- und Schwelgaszone. Dies wird durch einen Sauerstoffregelkreis sichergestellt.

Dabei ist nun die Brennprozeßführung unabhängig von der Einstellung der Oxidationstemperatur der Schwelgase; fehlende Energie wird über zusätzliche Brenner in die Anwärmzone eingebracht.

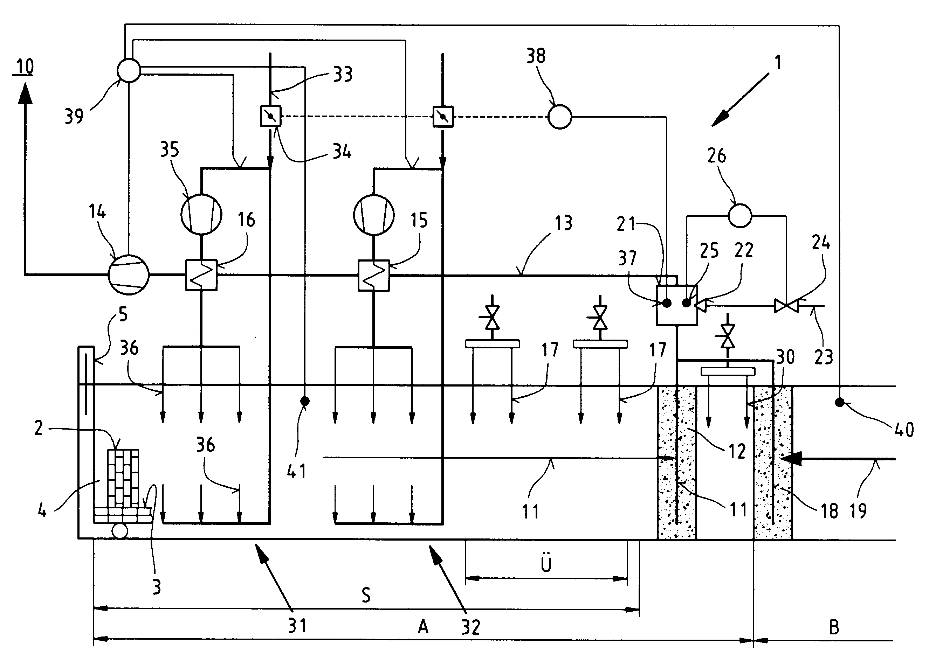

In der Zeichnung ist ein Ausführungsbeispiel eines gemäß der Erfindung ausgebildeten Tunnelofens zum Brennen von brennstoffhaltigen keramischen Formlingen dargestellt, das nachfolgend im einzelnen erläutert ist.

Der mit 1 bezeichnete Tunnelofen dient zum Brennen keramischer Formlinge 2, insbesondere von Formlingen, die im Ausgangsmaterial ausgasende Substanzen enthalten. Die Formlinge 2 werden dazu mittels Tunnelofenwagen 3 durch die einzelnen Zonen des am Eingang 4 durch ein Tor 5 verschließbaren Tunnelofen 1, nämlich die Anwärmzone A, die Brennzone B sowie die nicht dargestellte Kühlzone transportiert.

Die Anwärmzone A weist bei dem Tunnelofen 1 eine Schwelgaszone S auf, außerdem ist ein Bereich der Schwelgaszone S als Überhitzungszone Ü ausgebildet, um in einer thermischen Nachverbrennung die aus den Formlingen 2 ausgasenden Schadstoffe teilweise verbrennen zu können. Die Rauchgase 11 werden hierbei über eine Entnahmeöffnung 12 in einer Rauchgasleitung 13 abgeführt.

Die Überhitzungszone Ü ist mit einer gesonderten Befeuerung versehen, die durch steuerbare Hochgeschwindigkeitsbrenner 17 gebildet ist. Die Temperatur in der Überhitzungszone Ü kann somit auf einfache Weise gemäß der gewünschten Brennkurve gesteuert werden.

In die mit einem Ventilator 14 versehene Rauchgasleitung 13 sind zwei Wärmetauscher 15 und 16 eingesetzt, mittels denen außer der Umwälzluft auch Frischluft angewärmt werden kann, die in Vorschubrichtung der Formlinge 2 vor der Überhitzungszone Ü vorgesehenen Umwälzkreisen 31 und 32 zuführbar ist. Die Umwälzkreise 31 und 32 bestehen jeweils aus einer Zuführungsleitung 33 für Frischluft, einer in diese eingesetzten Stellklappe 34, einem oder mehreren Ventilatoren 35 sowie Düsen 36 und sind senkrecht zur Vorschubrichtung der Formlinge 2 wirkend ausgebildet.

Um die über die Entnahmeöffnung 12 der Aufheizzone A entnommenen Rauchgase 11 und/oder die der Brennzone B über eine weitere Entnahmeöffnung 18 entnommenen Rauchgase 19 auf eine dem zulässigen Emissionsgrad angepaßte Temperatur erhitzen zu können, ist die Rauchgasleitung 13 mit einer oder mehreren Brennkammern 21 versehen - dargestellt ist nur eine Brennkammer 21 -, wobei die in die Wände des Tunnelofens 1 integrierten Rauchgasabzüge als Brennkammern genutzt werden können.

Die Brennkammern 21 sind jeweils mit einem oder mehreren Brennern 22 ausgestattet, denen Brennstoff über eine mit einem Stellventil 24 versehene Leitung 23 zuführbar ist. Mit Hilfe eines in der Brennkammer 21 angeordneten Temperaturfühlers 25 und einer Regeleinrichtung 26 ist der Brenner 22 in Abhängigkeit von der in der Brennkammer 21 herrschenden Temperatur steuerbar.

In der Brennkammer 21 ist des weiteren ein Sauerstoffsensor 37 angeordnet, so daß mit Hilfe einer Steuereinrichtung 38, die auf die Stellklappen 34 der Umwälzkreise 31 und/oder 32 einwirkt, die diesen zuzuführende Frischluft gesteuert werden kann. Auch kann der Rauchgasabzug in der Rauchgasleitung 13 und/oder die Frischluftzufuhr der Umwälzkreise 31 und/oder 32 in Abhängigkeit von dem Sauerstoffgehalt in der Brennzone B und/oder der Temperatur in der Anwärmzone A gesteuert werden. Dazu sind in der Brennzone B ein Sauerstoffsensor 40 und in der Anwärmzone A ein Temperatursensor 41 angeordnet, die an einen auf den Ventilator 14 und/oder die Umwälzkreise 31, 32 einwirkenden Regelkreis 39 angeschlossen sind.

Beim Brennen brennstoffhaltiger keramischer Formlinge 2 wird das Rauchgas 11 der Anwärmzone A und/oder das Rauchgas 19 der Brennzone B entnommen und den Brennkammern 21 zugeführt, in denen dieses auf eine dem zulässigen Emissionsgrad angepaßte Temperatur von 600 - 850^{o} C erhitzt wird. In den nachgeschalteten Wärmetauschern 15 und 16 wird die aufgenommene Wärmeenergie an die Umwälzkreise 31 und 32 und die zuzuführende Frischluft abgegeben, so daß das Rauchgas, bevor es in die Atmosphäre 10 austritt, weitgehend abgekühlt ist. Um zu vermeiden, daß sich die Rauchgase 11 der Anwärmzone A mit den Rauchgasen 19 der Brennzone B vermischen, ist zwischen den diesen zugeordneten Entnahmeöffnungen 12 und 18 ein Luftvorhang als Trennwand vorgesehen. Dazu dienen ein oder mehrere in dem Tunnelofen 1 angeordnete Hochgeschwindigkeitsbrenner 30.

## Patentansprüche

1. Tunnelofen (1) zum Brennen von brennstoffhaltigen keramischen Formlingen (2), der in Vorschubrichtung der Formlinge (2) vor der Brennzone (B) eine Anwärmzone (A) aufweist und in dessen Rauchgasleitung (13) mindestens ein Wärmetauscher (15, 16) eingesetzt ist, mittels denen die einer einen Teil der Anwärmzone (A) bildenden Schwelgaszone (S) entnommen und in diese rückführbaren Schwelgase und/oder in einer mit einer gesonderten vorzugsweise durch steuerbare Hochgeschwindigkeitsbrenner (17) versehenen Überhitzungszone (Ü) aufheizbar sind,
**dadurch gekennzeichnet,**
daß die Rauchgasleitung (13) mit einer oder mehreren zwischen dem Tunnelofen (1) und den Wärmetauschern (15, 16) angeordneten Brennkammern (21) versehen ist, in denen die der Anwärmzone (A) und/ oder der Brennzone (B) entnommenen Rauchgase (Rauchgasstrom 11 bzw. 19) auf eine dem zulässigen Emissionsgrad angepaßte Temperatur von etwa 600 - 850^{o} C erhitzbar sind.

2. Tunnelofen nach Anspruch 1,
**dadurch gekennzeichnet,**
daß die Brenner (22) der vorzugsweise symmetrisch angeordneten Brennkammern (21) in Abhängigkeit von der in dieser herrschenden Temperatur steuerbar sind.

3. Tunnelofen nach Anspruch 1 oder 2,
**dadurch gekennzeichnet,**
daß als Brennkammern (21) die in die Wände des Tunnelofens (1) integrierten Rauchgasabzüge vorgesehen sind.

4. Tunnelofen nach einem oder mehreren der Ansprüche 1 bis 3,
**dadurch gekennzeichnet,**
daß der Tunnelofen (1) im Bereich der Schwelgaszone (S) in Vorschubrichtung der Formlinge (2) vor der Überhitzungszone (Ü) mit einem oder mehreren Umwälzkreisen (31, 32') versehen, denen angewärmte Frischluft zuführbar ist.

5. Tunnelofen nach Anspruch 4,
**dadurch gekennzeichnet,**
daß die Umwälz- und Frischluft mittels der in der Rauchgasleitung (13) angeordneten Wärmetauschern (15, 16) vorwärmbar ist.

6. Tunnelofen nach Anspruch 4 oder 5,
**dadurch gekennzeichnet,**
daß die Zufuhr der Frischluft zu den Umwälzkreisen (31, 32) in Abhängigkeit von dem in den Brennkammern (21) herrschenden Sauerstoffgehalt steuerbar ist.

7. Tunnelofen nach einem oder mehreren der Ansprüche 4 bis 6,
**dadurch gekennzeichnet,**
daß die Umwälzkreise (31, 32) senkrecht zur Vorschubrichtung der Formlinge (2) wirkend ausgebildet sind.

8. Tunnelofen nach einem oder mehreren der Ansprüche 1 bis 7,
**dadurch gekennzeichnet,**
daß der Rauchgasabzug in Abhängigkeit von dem Sauerstoffgehalt in der Brennzone (B) und/oder der Temperatur in der Anwärmzone einstellbar ist.

9. Tunnelofen nach einem oder mehreren der Ansprüche 1 bis 8,
**dadurch gekennzeichnet,**
daß zwischen der Entnahmeöffnung (12) für das aus der Anwärmzone (A) in die Brennkammer (21) abströmende Rauchgas (11) und der Entnahmeöffnung (18) für das aus der Brennzone (B) in die Brennkammer (21) abströmende Rauchgas (19) eine Trennwand vorzugsweise in Form eines Luftvorhanges vorgesehen ist.

10. Tunnelofen nach Anspruch 9,
**dadurch gekennzeichnet,**
daß zur Bildung des Luftvorhanges zwischen den beiden Entnahmeöffnungen (12, 13) in dem Tunnelofen (1) angeordnete Hochgeschwindigkeitsbrenner (30) vorgesehen sind.
